(19) Europäisches Patentamt / European Patent Office / Office européen des brevets

(11) **EP 2 985 359 B1**

(12) **EUROPEAN PATENT SPECIFICATION**

(45) Date of publication and mention of the grant of the patent:
**25.07.2018 Bulletin 2018/30**

(21) Application number: **13881584.0**

(22) Date of filing: **11.04.2013**

(51) Int Cl.:
*C22C 22/00* (2006.01)    *C21C 7/00* (2006.01)
*C21C 5/52* (2006.01)    *C22C 33/04* (2006.01)
*F27D 7/02* (2006.01)    *F27D 7/06* (2006.01)
*C21C 7/10* (2006.01)    *C22C 33/06* (2006.01)
*C21C 7/072* (2006.01)

(86) International application number:
**PCT/KR2013/003047**

(87) International publication number:
**WO 2014/168270 (16.10.2014 Gazette 2014/42)**

(54) **MANGANESE-CONTAINING MOLTEN STEEL PRODUCTION METHOD**

HERSTELLUNGSVERFAHREN FÜR MANGANHALTIGE STAHLSCHMELZE

PROCÉDÉ DE PRODUCTION D'ACIER FONDU CONTENANT DU MANGANÈSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2016 Bulletin 2016/07**

(73) Proprietor: **POSCO**
**Gyeongsangbuk-do 790-300 (KR)**

(72) Inventors:
 • **HAN, Woong-Hee**
  **Gwangyang-si**
  **Jeollanam-do 545-711 (KR)**
 • **YIM, Chang-Hee**
  **Pohang-si,**
  **Gyeongsangbuk-do 37666 (KR)**
 • **SONG, Min-Ho**
  **Gwangyang-si**
  **Jeollanam-do 545-711 (KR)**
 • **KANG, Soo-Chang**
  **Gwangyang-si**
  **Jeollanam-do 545-711 (KR)**

 • **AHN, Chong-Tae**
  **Gwangyang-si**
  **Jeollanam-do 545-711 (KR)**

(74) Representative: **Zech, Stefan Markus et al**
**Meissner Bolte Patentanwälte**
**Rechtsanwälte Partnerschaft mbB**
**Postfach 86 06 24**
**81633 München (DE)**

(56) References cited:
**JP-A- H09 170 015     JP-A- 2011 208 170**
**KR-A- 20080 072 786     KR-A- 20090 073 979**
**KR-A- 20090 103 616     US-A1- 2012 180 601**

 • **FANDRICH R ET AL: "Actual review on secondary metallurgy", REVUE DE METALLURGIE - CAHIERS D'INFORMATIONS TECHNIQUES, REVUE DE METALLURGIE. PARIS, FR, vol. 105, no. 7/8, 1 July 2008 (2008-07-01), pages 364-374, XP001521786, ISSN: 0035-1563, DOI: 10.1051/METAL:2008053**

**Description**

[Technical Field]

The present disclosure relates to a method of producing manganese-containing steel, and more particularly, to a method of producing high-quality molten manganese-containing steel without additional processes or problems such as a temperature decrease in molten steel and high manufacturing costs that may be caused by the use of large amounts of alloying elements when high manganese steel is produced using a basic oxygen furnace. Also, the present disclosure relates to a holding furnace for the method, and an apparatus including the holding furnace for producing molten manganese-containing steel.

In addition, the present disclosure relates to a method of producing molten manganese-containing steel without deteriorating the quality of the molten manganese-containing steel even though molten metals prepared in different amounts and at different production times are poured (mixed) together to form a product of the molten manganese-containing steel, and a holding furnace for the method, and an apparatus including the holding furnace for producing molten manganese-containing steel.

[Background Art]

In general, high manganese (Mn) steels have an Mn content of about 1 wt% to about 5 wt%, and some stainless steels have an Mn content of 10 wt% or less. In addition, some recent steels having a high degree of strength and a high degree of formability for use in automobiles have an Mn content of 15 wt% to 25 wt%. Generally, in a high manganese steel producing process using a basic oxygen furnace, molten iron having a carbon content of about 4.5 wt% is decarbonized in the basic oxygen furnace to produce molten steel having a carbon content of 0.2 wt% to 0.4 wt%, and when drawing the molten steel out of the basic oxygen furnace, a solid Mn-containing ferroalloy produced through a melting process and a refining process is supplied to the molten steel so as to control the Mn content of the molten steel. US2012/0180601 describes for example the addition of Mn in the form of a low carbon FeMn alloy. In such a process, the supply of an Mn-containing ferroalloy increases in proportion to a required Mn content of molten steel. However, if the supply of an Mn-containing ferroalloy increases, the temperature of molten steel decreases, and thus a method of preventing or compensating for a temperature decrease is necessary.

For example, a method of increasing the temperature of molten steel in a final stage of a basic oxygen furnace process or increasing the temperature of molten steel in a secondary refining process is used when producing molten steel having an Mn content of 1 wt% to 5 wt%, so as to compensate for a temperature decrease in the molten steel caused by the supply of a ferroalloy. However, in a process of manufacturing high manganese steel having an Mn content of 10 wt% or greater, molten steel contained in a basic oxygen furnace has to be maintained at a high temperature so as to prepare for a temperature decrease when a ferroalloy is supplied to the molten steel. In this case, the temperature of the molten steel is maintained at a temperature higher than a normal process temperature by about 150°C or greater, thereby causing excessive oxidation of the molten steel and increasing the amount of oxygen dissolved in the molten steel. As a result, when a ferroalloy is supplied to the molten steel, the ferroalloy may be easily oxidized, and thus large amounts of effective metal elements contained in the ferroalloy may be wasted.

Therefore, in another method for solving the above-mentioned problems, only a portion of the necessary amount of a ferroalloy is supplied to molten steel when the molten steel is drawn out of a basic oxygen furnace, and then the remaining portion of the necessary amount of the ferroalloy is supplied to the molten steel in a secondary refining process while increasing the temperature of the molten steel using oxidation energy or electrical energy. However, the method of increasing the temperature of molten steel in a secondary refining process requires a large amount of energy, as compared to the case of increasing the temperature of molten steel in a basic oxygen furnace. In addition, the method has low efficiency with an increased process time and higher manufacturing costs.

In a method disclosed in Korean Patent Application Laid-open Publication No. 2008-0072786, molten ferromanganese (FeMn) having a carbon content of about 6%, molten steel having a carbon content of about 0.1%, and a necessary amount of a slag forming agent are supplied to a FeMn-refining basic oxygen furnace. However, the disclosed method requires additional processes such as a refining process for obtaining necessary impurity contents in a final steel product, thereby increasing the costs and process time of a manufacturing process. In addition, when steel is produced by the disclosed method, it is difficult to adjust impurity contents in molten FeMn according to a required composition of molten steel.

In another method disclosed in Korean Patent No. 1047912, refined molten steel is supplied to a molten ferroalloy, or vice versa, and the content of at least one of carbon, phosphorus, and nitrogen in the molten ferroalloy is controlled according to the state or kind of the molten steel by taking into account the impurity contents of the molten steel at the end of a molten steel basic oxygen furnace, the amount of the molten ferroalloy, and design specifications and weight values set according to types of steel.

However, according to the disclosed method, since molten steel and a molten ferroalloy are supplied through different processes, it is necessary to supply the molten steel and the molten ferroalloy on time in spite of differences in production amounts and process times. Particularly, manganese has a high vapor pressure and a high degree of affinity with oxygen and nitrogen and so may be easily combined therewith. Therefore, when storing a molten metal including manganese, manganese may be wasted, or additional processes may be necessary, thereby causing problems related to costs and processes.

[Disclosure]

[Technical Problem]

Aspects of the present disclosure may provide a method of rapidly producing molten manganese-containing steel according to the production of molten steel by preparing a high-quality molten ferroalloy or nonferrous metal containing manganese on time in spite of differences between processes, a holding furnace for the method, and an apparatus including the holding furnace for producing molten manganese-containing steel.

Aspects of the present disclosure may also provide a method of producing molten manganese-containing steel by adjusting the state of a molten ferroalloy or molten nonferrous metal according to the state of molten steel produced using a basic oxygen furnace, a holding furnace for the method, and an apparatus including the holding furnace for producing molten manganese-containing steel.

In addition, according to the present disclosure, when storing a molten ferroalloy or molten nonferrous metal, containing manganese the molten ferroalloy or molten nonferrous metal is denitrified or prevented from absorbing nitrogen, and thus post processing such as a denitrification process may not be performed.

[Technical Solution]

Accordingly, the present disclosure provides a method of producing molten manganese-containing steel. According to the present disclosure, a method of producing molten manganese-containing steel may include: preparing a molten ferroalloy containing manganese or a molten nonferrous metal; maintaining the molten ferroalloy or the molten nonferrous metal at a temperature equal to or higher than a melting point thereof; and pouring the molten ferroalloy or the molten nonferrous metal into prepared molten steel, wherein in the maintaining of the molten ferroalloy or the molten nonferrous metal, the molten ferroalloy or the molten nonferrous metal is subjected to a nitrogen-absorption prevention process or a denitrification process.

The maintaining of the molten ferroalloy or the molten nonferrous metal may be carried out in a holding furnace together with the nitrogen-absorption prevention process or the denitrification process, and the nitrogen-absorption prevention process or the denitrification process may include supplying argon (Ar) gas to the holding furnace as an atmospheric gas to maintain an interior of the holding furnace at a positive pressure.

The maintaining of the molten ferroalloy or the molten nonferrous metal may be carried out in a holding furnace together with the nitrogen-absorption prevention process or the denitrification process, and the nitrogen-absorption prevention process or the denitrification process may include agitating the molten ferroalloy or the molten nonferrous metal in at least one of upper and lower regions of the holding furnace using argon (Ar) gas.

The nitrogen-absorption prevention process or the denitrification process may include adding silicon (Si) to the molten ferroalloy such that the molten ferroalloy may have a silicon (Si) content of 1.5 wt% or greater.

The holding furnace may include: a case; an accommodation unit disposed in the case and including an internal space to accommodate a molten or solid ferroalloy or nonferrous metal; a heating unit configured to heat the ferroalloy or nonferrous metal contained in the accommodation unit; and a cover disposed on an upper side of the accommodation unit to close the internal space of the accommodation unit, wherein the cover may include an atmospheric gas supply unit connected to an inert gas supply unit and supplying an atmospheric gas to the accommodation unit so that the ferroalloy or the nonferrous metal melted in the accommodation unit may be denitrified or prevented from absorbing nitrogen.

The preparing of the molten ferroalloy or the molten nonferrous metal may be performed in the holding furnace.

The molten ferroalloy or the molten nonferrous metal may be prepared in an amount greater than a required amount in the pouring of the molten ferroalloy or the molten nonferrous metal, and after the required amount of the molten ferroalloy or the molten nonferrous metal is poured into the molten steel, a remaining amount of the molten ferroalloy or the molten nonferrous metal may be continuously maintained at a temperature equal to or greater than the melting point thereof.

The preparing of the molten ferroalloy or the molten nonferrous metal may include melting solid FeMN or a solid Mn metal having a manganese (Mn) content and a phosphorus (P) content according to the following formula:

$$P \text{ content (wt\%)} < -0.026 \times (\text{target Mn content (wt\%)}$$
$$\text{of Mn-containing molten steel} + (4.72 \times 10^{-4}) \times (\text{target Mn}$$
$$\text{content (wt\%) of Mn-containing molten steel})^2.$$

The heating unit of the holding furnace may include an induction coil, and the preparing of the molten ferroalloy or the molten nonferrous metal may include induction heating using the induction coil.

The pouring of the molten ferroalloy or the molten nonferrous metal may include: pouring the molten ferroalloy or the molten nonferrous metal into a ladle in which the molten steel is contained; and agitating the molten steel together with the molten ferroalloy or the molten nonferrous metal, wherein the agitating may be performed by supplying an inert gas through a lower side of the ladle.

The pouring of the molten ferroalloy or the molten nonferrous metal may include: pouring the molten ferroalloy or the molten nonferrous metal into a ladle in which the molten steel is contained; and agitating the molten steel together with the molten ferroalloy or the molten nonferrous metal, wherein the agitating may be performed using an agitator inserted through an upper side of the ladle into the molten steel and the molten ferroalloy or the molten nonferrous metal.

In the maintaining of the molten ferroalloy or the molten nonferrous metal, the molten ferroalloy or the molten nonferrous metal may be maintained at a temperature of 1300°C to 1500°C, and immediately prior to the pouring of the molten ferroalloy or the molten nonferrous metal, the method may further include heating the molten ferroalloy or the molten nonferrous metal in consideration of states of the molten steel and target states of high manganese molten steel.

After the pouring of the molten ferroalloy or the molten nonferrous metal, the method may further include performing an RH vacuum refining process or a ladle furnace (LF) refining process in which at least one of Al, C, Cu, W, Ti, Nb, Sn, Sb, Cr, B, Ca, Si, and Ni is supplied to the molten steel and the molten ferroalloy or the molten nonferrous metal, and the RH vacuum refining process may be performed together with a dehydrogenation process.

In addition, the present disclosure provides a holding furnace.

For example, according to another aspect of the present disclosure, a holding furnace may include: a case; an accommodation unit disposed in the case and including an internal space to accommodate a solid or molten ferroalloy or a solid or molten nonferrous metal; a heating unit configured to heat the ferroalloy or nonferrous metal contained in the accommodation unit; and a cover disposed on an upper side of the accommodation unit to close the internal space of the accommodation unit, wherein the cover includes an atmospheric gas supply unit connected to an inert gas supply unit and supplying an atmospheric gas to the accommodation unit so that the ferroalloy or the molten nonferrous metal melted in the accommodation unit is denitrified or prevented from absorbing nitrogen.

The heating unit may include at least one of: an induction coil wound around the accommodation unit; an electrode bar disposed in the cover; and a plasma disposed in the cover.

The holding furnace may further include a control unit connected to the heating unit, wherein the molten ferroalloy or the molten nonferrous metal may be maintained at a temperature of 1300°C to 1500°C under the control of the control unit, and immediately prior to the molten ferroalloy or the molten nonferrous metal being poured into molten steel, the molten ferroalloy or the molten nonferrous metal may be heated under the control of the control unit.

An atmospheric gas supply tube may be disposed in the cover disposed on the upper side of the accommodation unit, and the cover may include a vent to maintain an interior of the holding furnace at a constant positive pressure when an atmospheric gas is supplied to the interior of the holding furnace.

The holding furnace may further include: a siphon structure including a suction part inserted through the cover into the molten ferroalloy or the molten nonferrous metal contained in the accommodation unit, a discharge part connected to the suction unit so as to discharge the molten ferroalloy or the molten nonferrous metal drawn through the suction part to a ladle, a transfer part connected between the suction part and the discharge part to transfer the molten ferroalloy or the molten nonferrous metal, and an initial pressure port connected to the transfer part for creating an initial pressure difference; and a driving unit connected to a lower side of the case to assist operations of the siphon structure by lifting or lowering the case.

The holding furnace may further include: a driving unit connected to the case for lifting or lowering the case and the accommodation unit; a first guide disposed on an outer surface of the case; and a guide frame disposed at an outer side of the case and including a guide roller, the guide roller blocking an upward movement of the first guide by engaging with the first guide when the first guide is moved upwardly, wherein a connection point at which the driving unit is connected to the case may be located behind the guide roller when viewed on a horizontal plane, and when the case is moved upwardly by the driving unit, the first guide may be hooked on the guide roller and then the case is tilted.

In addition, the present disclosure provides an apparatus for producing molten manganese-containing steel.

For example, according to another aspect of the present disclosure, an apparatus for producing molten manganese-containing steel may include: an Mn supply unit supplying a molten metal having a high manganese content;

a molten steel supply unit supplying molten steel; and a ladle configured to move between the molten steel supply unit and the Mn supply unit to receive the molten metal having a high Mn content from the Mn supply unit and the molten steel from the molten steel supply unit, wherein the Mn supply unit includes the holding furnace.

An inert gas supply tube may be disposed on a lower side of the ladle, and the ladle may be connected to an inert gas supply unit at a position at which the ladle receives the molten metal from the Mn supply unit or the molten steel from the molten steel supply unit, and the molten metal and the molten steel poured into the ladle may be agitated using an inert gas.

[Advantageous Effects]

According to the above-described aspects of the present disclosure, the following effects may be provided.

Embodiments of the present disclosure provide a method of immediately producing molten manganese-containing steel by preparing a high-quality molten ferroalloy or nonferrous metal on time according to the production of molten steel in spite of differences between processes, a holding furnace for the method, and an apparatus including the holding furnace for producing molten manganese-containing steel. Particularly, according to the present disclosure, a molten ferroalloy or molten nonferrous metal is refined (denitrified or prevented from absorbing nitrogen) while being maintained within a constant temperature range. That is, the temperature of a refining process which is one of important conditions for refining may be maintained at a constant level, thereby guaranteeing high refining efficiency. In addition, a production rate difference between processes may be properly handled without having to perform post processing, thereby improving the efficiency of processes.

In addition, embodiments of the present disclosure provide a method of producing molten manganese-containing steel by adjusting the state of a molten ferroalloy or molten nonferrous metal according to the state of molten steel produced using a basic oxygen furnace, a holding furnace for the method, and an apparatus including the holding furnace for producing molten manganese-containing steel.

Furthermore, according to the present disclosure, when storing a molten ferroalloy or molten nonferrous metal, the molten ferroalloy or molten nonferrous metal is denitrified or prevented from absorbing nitrogen, and thus post processing such as a denitrification process may not be performed.

[Description of Drawings]

FIG. 1 is a flowchart illustrating a method of producing manganese-containing steel in the related art.

FIG. 2 is a flowchart illustrating a method of producing molten manganese-containing steel according to an embodiment of the present disclosure.

FIG. 3 is a flowchart illustrating a method of producing molten manganese-containing steel according to another embodiment of the present disclosure.

FIGS. 4A to 4C are schematic views illustrating an apparatus for producing molten manganese-containing steel according to an embodiment of the present disclosure.

FIG. 5 is a schematic cross-sectional view illustrating a holding furnace of the molten manganese-containing steel production apparatus.

FIG. 6 is a plan view illustrating the holding furnace of the molten manganese-containing steel production apparatus.

FIG. 7 is a partial cut-away view illustrating the holding furnace of the molten manganese-containing steel production apparatus.

FIGS. 8A and 8B are schematic cross-sectional views examples of the holding furnace of the molten manganese-containing steel production apparatus according to embodiments of the present disclosure.

FIGS. 9 and 10 are schematic cross-sectional views illustrating other examples of the holding furnace of the molten manganese-containing steel production apparatus according to embodiments of the present disclosure.

FIGS. 11 and FIGS. 12A to 12C are a cross-sectional view and operational views illustrating the holding furnace of the molten manganese-containing steel production apparatus according to embodiments of the present disclosure.

FIG. 13 is a cross-sectional view illustrating another example of the holding furnace of the molten manganese-containing steel production apparatus according to an embodiment of the present disclosure.

FIG. 14 is a graph illustrating the content of nitrogen over time in Example 1, and FIG. 15 is an image of a molten metal surface in Example 1.

FIG. 16 is a graph illustrating the content of nitrogen over time in Comparative Example 1, and FIG. 17 is an image of a molten metal surface in Comparative Example 1.

FIG. 18 is a graph illustrating the content of nitrogen over time in Example 2.

FIG. 19 is a graph illustrating the content of nitrogen over time in Example 3.

FIG. 20 is a graph illustrating the content of nitrogen over time in Example 4.

FIG. 21 is a graph illustrating the content of nitrogen in Example 2 and Comparative Example 2.

[Best Mode]

Hereinafter, methods of producing manganese (Mn)-containing steel will be described in detail according to embodiments of the present disclosure with reference to the accompanying drawings. The disclosure may, however, be exemplified in many different forms and should not be construed as being limited to the specific embodiments set forth herein. Rather, these embodiments are provided so that this disclosure will be thorough and complete, and will fully convey the scope of the present invention to those skilled in the art.

In a basic oxygen furnace process for producing high manganese steel, a manganese-containing ferroalloy may be supplied to low manganese steel. In this case, although varying according to the content of manganese in a final product, 45 tons to 63 tons of a ferroalloy may have to be supplied to every 280 tons of molten steel so as to produce a steel having an Mn content of 15 wt% or greater, and as a result, the temperature of the molten steel may be decreased by about 250°C to about 350°C. Theoretically, when molten steel is drawn out of a basic oxygen furnace, the temperature of the molten steel has to be about 1900°C so as to compensate for such a decrease in the temperature of the molten steel caused by the supply of a ferroalloy. However, this temperature is outside the temperature range controllable by currently available refining equipment. Even through a temperature increasing apparatus such as a ladle furnace is used, it takes 100 or more minutes to increase the temperature of molten steel for preparing for a temperature decrease, thereby excessively increasing the process time. In addition, when manganese is melted in an electric furnace, the nitrogen content of molten steel may increase to about 300 ppm or greater.

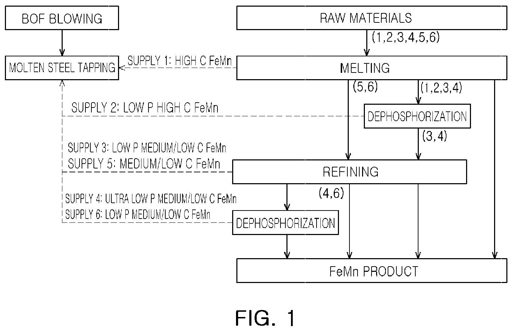

Thus, as shown in FIG. 1, a method of supplying a molten manganese ferroalloy to molten steel produced through a blowing process in a basic oxygen furnace has been proposed. Referring to FIG. 1, after a melting process (high carbon FeMn), a refining process (medium/low carbon FeMn), or a dephosphorization process (low phosphorus (P) FeMn), a molten manganese ferroalloy is directly supplied to molten steel drawn out of a basic oxygen furnace. In this case, however, a process of producing molten steel and a process of producing a molten ferroalloy are required, and then the molten metals (molten steel and molten ferroalloy) are poured (mixed) together. Therefore, if the amount of final molten manganese-containing steel is excessive or insufficient, the amount of one of the molten metals may have to be adjusted based on the amount of the other of the molten metals, and this may result in unnecessary waste of molten steel. Thus, another method of storing a molten metal in a container has been proposed. However, a molten metal such as a molten ferroalloy or particularly a molten manganese-containing ferroalloy may be oxidized or nitrided in a container, and post processing may be necessary to process the molten metal.

Thus, the embodiments of the present disclosure provide methods of producing molten manganese-containing steel that do not have the above-mentioned problems. According to the embodiments of the present disclosure, a refining process (such as a denitrification process or a process for preventing nitrogen absorption) is performed in a holding furnace so as to prevent the loss of manganese, omit post processing, and increase the efficiency of the refining process.

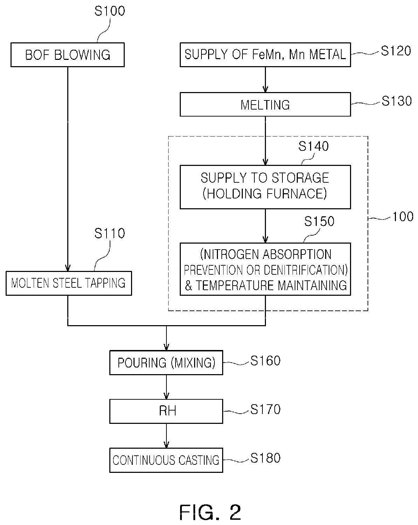

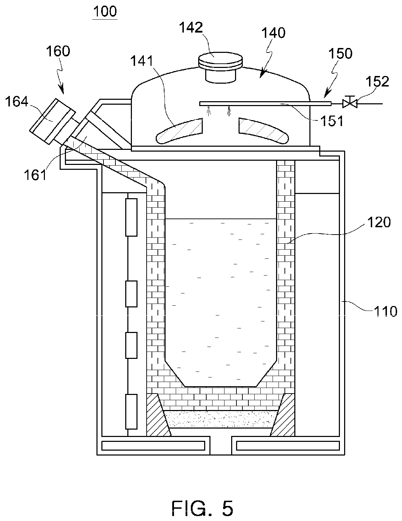

FIG. 2 is a schematic flowchart illustrating a method of producing molten manganese-containing steel according to an embodiment of the present disclosure. As shown in FIG. 2, molten steel may be produced in the same manner as that used in the related art. Molten steel produced in a blast furnace may be supplied to a basic oxygen furnace and may then be subjected to a process such as a blowing process or a dephosphorization process according to necessary properties (S100). Thereafter, the molten steel is drawn of the basic oxygen furnace (S110). Meanwhile, FeMn (hereinafter referred to as a ferroalloy) such as an Mn-containing ferroalloy or an Mn metal is supplied to a ferroalloy melting furnace (S120) and is melted (S130). Thereafter, the molten ferroalloy is poured into a holding furnace 100 (described with reference to FIG. 5) (S140). Before the molten ferroalloy is poured into the holding furnace 100, the molten ferroalloy may be dephosphorized or refined by a well-known method if necessary.

The molten ferroalloy is stored in the holding furnace 100 and maintained at a temperature equal to or higher than the melting point of the molten ferroalloy (S150), and then the molten ferroalloy is poured into (mixed with) the molten steel (S160). Herein, expressions such as "temperature maintaining" or "being maintained at a temperature" refer to maintaining the temperature of the molten ferroalloy by heating the molten ferroalloy in the case of heat loss as well as referring to simply preventing a temperature decrease of the molten ferroalloy. The molten ferroalloy is maintained within the temperature range of about 1300°C to 1500°C.

An induction heating method using an induction coil may be used for temperature maintaining, and in this case, an induction agitating effect may also be obtained owing to a magnetic field induced during induction heating. Owning to the induction agitating effect, the temperature and components of the molten ferroalloy may be uniformly distributed. In addition, owing to a molten ferroalloy (FeMn) agitating effect induced by the induction agitating effect, the efficiency of a denitrification refining process may be improved.

According to the embodiment of the present disclosure, while the molten ferroalloy is stored in the holding furnace 100 and maintained at a temperature equal to or higher than the melting point of the molten ferroalloy (S150), an inert gas (such as argon (Ar) gas) is used to prevent the molten ferroalloy from absorbing nitrogen, or the molten ferroalloy is refined. That is, according to the embodiment of the present disclosure, a refining process is performed while the molten ferroalloy is stored in the holding furnace 100 at a temperature equal to or higher than the melting point of the molten ferroalloy.

Since temperature maintaining and refining are simultaneously performed, time loss may be prevented compared to the case that temperature maintaining and refining are performed separately. In addition, if a refining process is individually performed, a temperature decrease may occur, and thus an additional temperature maintaining process may have to be performed. This may cause heat loss. However, according to the embodiment of the present disclosure, energy may be saved because refining and temperature maintaining are simultaneously performed.

Moreover, since one of basic conditions affecting the efficiency of a refining process is a temperature condition, if a refining process is individually performed, the efficiency of the refining process may be lowered due to a temperature variation caused by heat loss. However, according to the embodiment of the present disclosure, a refining process is performed while continuously maintaining the temperature of a molten ferroalloy, thereby increasing the efficiency of the refining process and minimizing heat and time loss that may occur if the refining process is individually performed.

After the molten ferroalloy and the molten steel are poured (mixed) together to obtain molten manganese-containing steel, the molten manganese-containing steel may be subjected to an RH vacuum refining process (S170) or a ladle furnace (LH) refining process in which at least one of Al, C, Cu, W, Ti, Nb, Sn, Sb, Cr, B, Ca, Si, and Ni is supplied to the molten manganese-containing steel.

Alternatively, while performing a RH vacuum refining process in which at least one of Al, C, Cu, W, Ti, Nb, Sn, Sb, Cr, B, Ca, Si, and Ni is supplied to the molten manganese-containing steel, a dehydrogenation process may be performed.

Thereafter, a continuous casting process may be performed to produce slabs or steel sheets (S180).

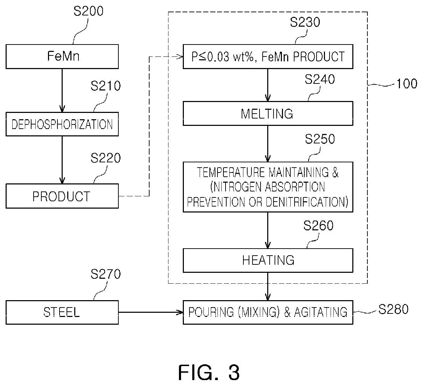

FIG. 3 is a schematic flowchart illustrating a method of producing molten manganese-containing steel according to another embodiment of the present disclosure. Referring to FIG. according to the other embodiment, FeMn is melted in a melting furnace (S200) and is subjected to a process such as a dephosphorization process (S210) to produce to a product having a desired composition (S220).

The product may have a phosphorus (P) content of 0.03 wt% or less because the upper limit of the phosphorus (P) content of molten manganese-containing steel is generally 0.03 wt% for a continuous casting process. If manganese-containing steel, in particular, high manganese steel having a phosphorus (P) content of 0.03 wt% or greater, is processed through a continuous casting process, surface defects may be formed due to phosphorus (P).

Therefore, when high Mn steel is produced, the phosphorus (P) content of solid FeMn or a solid Mn metal that will be supplied to the holding furnace 100 may be limited according to the Mn content of the high Mn steel as expressed by the following Formula 1. That is, as the Mn content of high Mn steel increases, the phosphorus (P) content of a molten metal supplied to the melting furnace decreases. In addition, when molten FeMn or a molten Mn metal is supplied instead of supplying solid FeMn or a solid Mn Metal, the phosphorus (P) content of the molten FeMn or the molten Mn metal may be adjusted according to the following Formula 1.

[Formula 1]

$$\text{P content (wt\%) of molten metal in holding furnace} <$$
$$-0.026 \times (\text{Mn content (wt\%) of high Mn steel} + (4.72 \times 10^{-4})$$
$$\times (\text{Mn content (wt\%) of high Mn steel})^2$$

A solid ferroalloy is supplied to the holding furnace 100 and is melted in the holding furnace 100 (S240). The temperature of the molten ferroalloy is maintained (S250) until a pouring (mixing) process S280 is performed. While the temperature of the molten ferroalloy is maintained, a process of preventing nitrogen absorption or a refining (denitrification) process is performed (S250).

In the temperature maintaining process S250, the temperature of the molten ferroalloy is maintained within the temperature range of 1300°C to 1500°C, and the interior of the holding furnace 100 is maintained at a positive pressure by blowing argon (Ar) gas to an upper internal region of the holding furnace 100 through a lance or blowing argon (Ar) gas directly into the molten ferroalloy through a lower gas tube so as to denitrify the molten ferroalloy or prevent the molten ferroalloy from absorbing nitrogen. While or after the argon (Ar) gas is supplied to the holding furnace 100, silicon (Si) may be supplied to the holding furnace 100.

Meanwhile, molten steel is prepared through a separate process S270, and the molten steel is mixed with the molten ferroalloy in the pouring (mixing) process S280.

In the embodiment illustrated in FIG. 3, the molten ferroalloy contained in the holding furnace 100 is heated (S260) according to the state of the molten steel before pouring (mixing) or a desired state after pouring (mixing). To this end, the temperature of the molten steel may be checked immediately prior to or after pouring (mixing), so as to control the temperature of the holding furnace 100. In temperature control, the final temperature of the holding furnace 100 may be controlled as follows: the temperature of the molten metal (molten ferroalloy) in the holding furnace 100 may be calculated by the following Formula 2 using the temperature of the molten steel (S270) to be mixed with the molten metal of the holding furnace 100 and a target temperature after the molten steel and the molten metal are mixed, and the temperature of the molten metal contained in the holding furnace 100 may be controlled based on the calculated temperature.

[Formula 2]

[(molten steel amount x molten steel temperature (°C)) + (molten metal amount in holding furnace × molten metal temperature (°C) in holding furnace)] / (final amount of Mn-containing molten steel) = temperature (°C) after pouring (mixing) (°C)

That is, the temperature of the molten manganese-containing steel may be controlled by adjusting the temperature of the holding furnace 100 according to the temperature of the molten steel supplied through the process S270 after pouring (mixing). For example, when the molten manganese-containing steel is initially produced, the temperature of the molten steel may be lower than a target temperature set for the molten steel and may be different from the temperature of the molten ferroalloy drawn out of the holding furnace 100, and thus the temperature of the molten manganese-containing steel may be lower than a desired temperature after pouring (mixing). In this case, according to the embodiment of the present disclosure, the temperature of the molten ferroalloy contained in the holding furnace 100 may be increased in the heating process S260 so as to compensate for the low temperature of the molten steel, and thus the temperature of the molten manganese-containing steel may be adjusted to a desired temperature after pouring (mixing).

During pouring (mixing), the content of manganese (Mn) may vary in a vertical direction due to a density difference between the molten steel and the molten ferroalloy, and thus the molten steel and the molten ferroalloy may be agitated using a mechanical tool or gas.

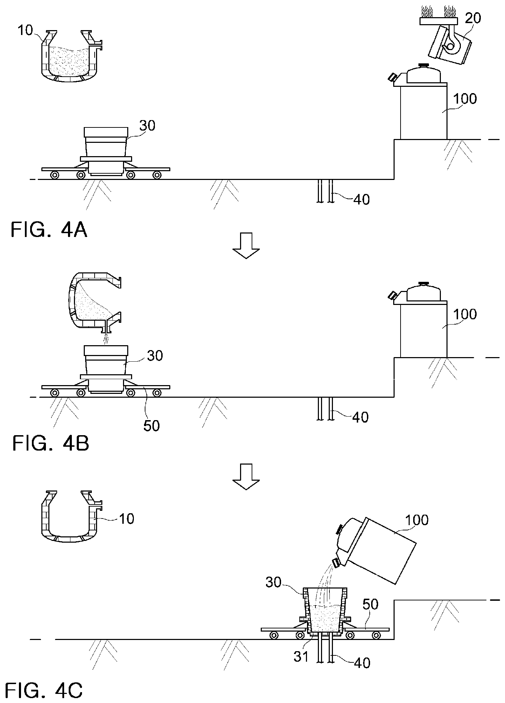

FIGS. 4A to 4C are views schematically illustrating an apparatus for producing molten manganese-containing steel according to an embodiment of the present disclosure. FIGS. 4A to 4C illustrate the apparatus according to processes.

Referring to FIG. 4A, molten steel is produced using a basic oxygen furnace 10, and a molten ferroalloy is produced using a ferroalloy melting furnace 20. The molten ferroalloy produced using the ferroalloy melting furnace 20 is poured into a holding furnace 100. A process for preventing nitrogen absorption and a denitrification process are performed on the molten ferroalloy contained in the holding furnace 100. The volume of the holding furnace 100 is sufficiently large, such that the molten ferroalloy contained in the holding furnace 100 may be supplied to the molten steel at least once.

In the embodiment of the present disclosure, since molten ferroalloy is stored in the holding furnace 100, even though the volume of the ferroalloy melting furnace 20 is smaller than the volume of the basic oxygen furnace 10, molten steel produced a plurality of times using the ferroalloy melting furnace 20 may be stored in the holding furnace 100. That is, even though the production rates of the ferroalloy melting furnace 20 and the basic oxygen furnace 10 are different, problems related with the different production rates may be solved using the the holding furnace 100. On the contrary, even though the volume of the ferroalloy melting furnace 20 is greater than the volume of the basic oxygen furnace 10, after a proper amount of a molten ferroalloy is supplied according to the amount of molten steel produced using the basic oxygen furnace 10, the remaining amount of the molten ferroalloy may be stored in the holding furnace 100. That is, each process may be freely operated.

Referring to FIG. 4B, the molten steel produced using the basic oxygen furnace 10 is poured into a ladle 30, and the ladle 30 is moved toward the holding furnace 100 using a ladle transfer car 50.

Referring to FIG. 4C, the molten ferroalloy is poured from the holding furnace 100 into the ladle 30 in which the molten steel is contained. At this time, a gas supply tube 31 disposed at a lower side of the ladle 30 is connected to a gas supply unit 40 located adjacent to the holding furnace 100 so as to supply an inert gas a molten metal mixture of the molten steel and the molten ferroalloy through the lower side of the ladle 30 and thus agitate the molten metal mixture.

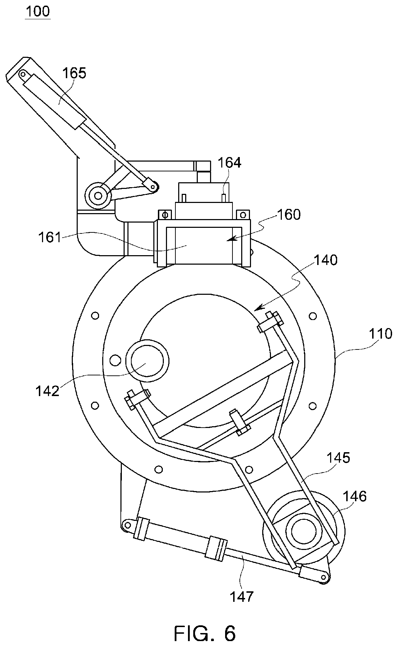

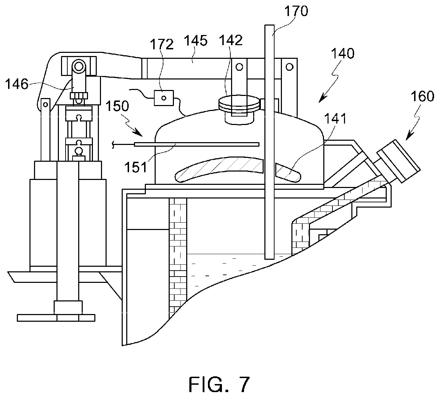

FIG. 5 is a cross-sectional view illustrating the holding furnace 100 according to an embodiment of the present disclosure, and FIG. 6 is a plan view illustrating the holding furnace 100 according to the embodiment of the present disclosure. FIG. 7 is an enlarged view illustrating an upper cover 140 of the holding furnace 100.

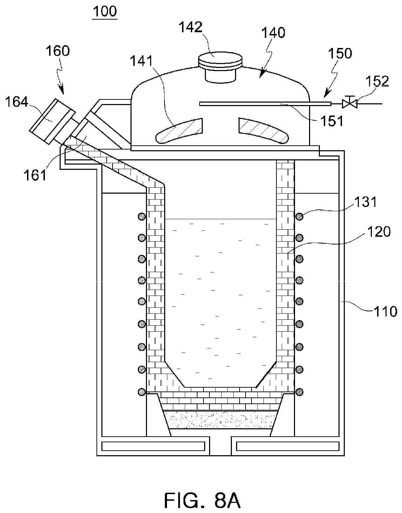

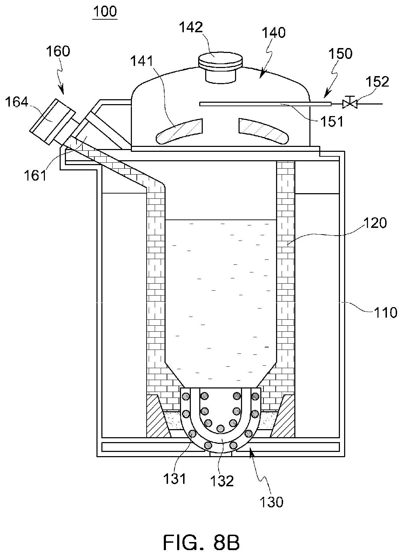

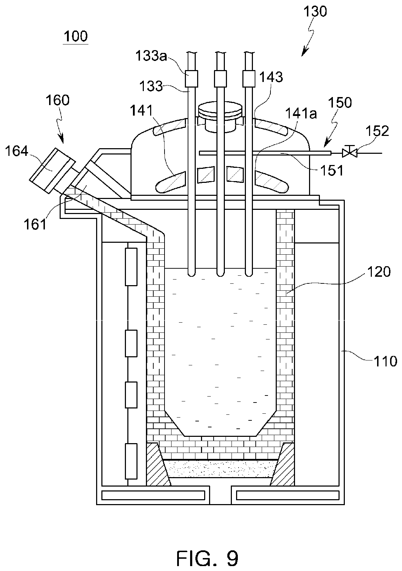

According to the embodiment of the present disclosure, the holding furnace 100 includes: a case 110 forming the exterior of the holding furnace 100; an accommodation unit 120 disposed in the case 110 and formed of a refractory material to accommodate a molten or solid ferroalloy; a heating unit 130 (refer to FIGS. 8 and 9) connected to the accommodation unit 120 to heat a ferroalloy or a nonferrous metal accommodated in the accommodation unit 120; and the upper cover 140 disposed on an upper side of the accommodation unit 120 to close an internal space of the accommodation unit 120. A molten steel outlet 160 is formed in an upper lateral side of the holding furnace 100.

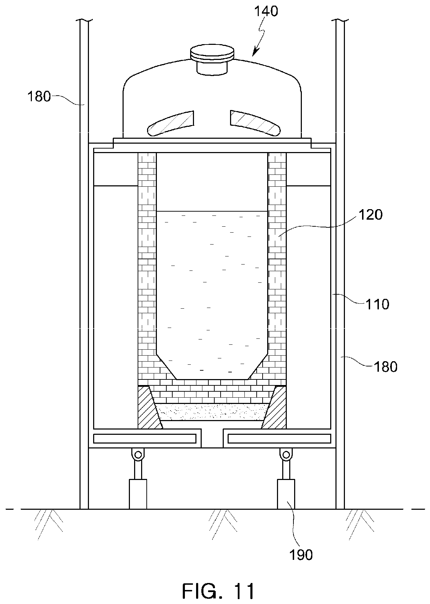

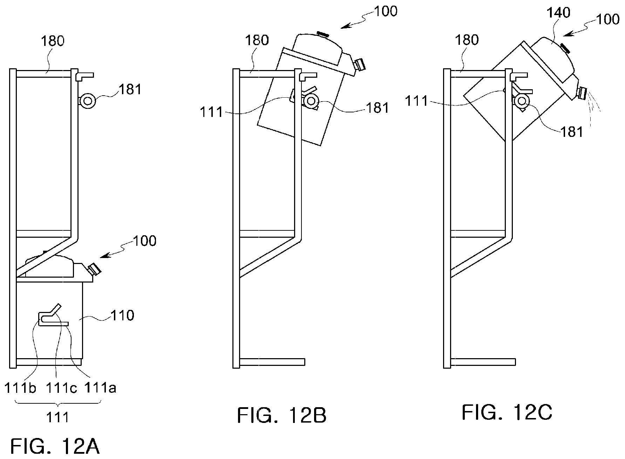

The case 110 may be a steel shell surrounding and protecting the accommodation unit 120 and the heating unit 130, and first guides 111 (refer to FIGS. 12A to 12C) or driving units 190 (refer to FIG. 11) may be connected to the case 110 to move and tilt the case 110 for pouring a molten ferroalloy from the accommodation unit 120 to the ladle 30 (refer to FIGS. 4A to 4C).

The accommodation unit 120 is formed of a refractory material to contain a solid or molten ferroalloy, and the upper side of the accommodation unit 120 may be closed with the upper cover 140.

The upper cover 140 includes: a refractory material 141 disposed on a surface facing the accommodation unit 120; a window 142 through which a molten ferroalloy contained in the accommodation unit 120 can be seen or sampled; and a connection part 145 disposed on an outer side of the upper cover 140 and connected to a rotating unit 147 and a vertical actuator 146 that move the upper cover 140. When a solid or molten ferroalloy is initially supplied to the accommodation unit 120, the upper cover 140 is opened and moved and rotated away from the accommodation unit 120, and after the solid or molten ferroalloy is completely supplied, the upper cover 140 closes the accommodation unit 120.

Referring to FIG. 6, the molten steel outlet 160 is formed in an upper lateral side of the accommodation unit 120, and if the case 110 is tilted, the molten ferroalloy flows out of the accommodation unit 120 through the molten steel outlet 160. The molten steel outlet 160 is closed with a molten steel outlet cover 164, and the molten steel outlet cover 164 is opened by a molten steel outlet driving unit 165 only when a molten ferroalloy is drawn out of the accommodation unit 120.

Referring to FIG. 7, an atmospheric gas supply unit 150 is disposed in the upper cover 140. The atmospheric gas supply unit 150 includes: an atmospheric gas supply valve 152 configured to control the flow rate of an atmospheric gas supplied from an atmospheric gas supply source (not shown); and an atmospheric gas supply tube 151 connected to the atmospheric gas supply valve 152 and extending into the upper cover 140.

An inert atmospheric gas may be supplied through the atmospheric gas supply tube 151, and a vent 172 may be provided to maintain the interior of the holding furnace 100 at a constant positive pressure when an atmospheric gas is supplied to the holding furnace 100. If the interior pressure of the holding furnace 100 becomes greater than a certain level, the vent 172 is opened to discharge an inert gas such as argon (Ar) gas from the interior of the holding furnace 100.

The upper cover 140 includes an opening to receive a lance 170, and the lance 170 may be insert into a molten ferroalloy isothermally contained in the holding furnace 100 through the opening of the upper cover 140 so as to denitrify the molten ferroalloy by blowing an inert gas therein.

Alternatively, a gas supply unit (not shown) may be disposed at a lower side of the holding furnace 100 instead of the lance 170, so as to supply an inert gas through the lower side of the holding furnace 100 and denitrify the molten ferroalloy contained in the holding furnace 100.

FIGS. 8A and 8B illustrate examples of the heating unit 130 including induction coils 131 according to embodiments of the present disclosure. Referring to FIG. 8A, the induction coil 131 is wound around the accommodation unit 120 formed of a refractory material to melt a solid ferroalloy contained in the accommodation unit 120 or maintain the temperature of a molten ferroalloy contained in the accommodation unit 120. If an induction heating method is used as illustrated in FIG. 8A, since the induction coil 131 is disposed outside the refractory material of the accommodation unit 120, the interior of the holding furnace 100 may be easily sealed. In addition, since the molten ferroalloy is agitated by a magnetic field induced for induction heating, the temperature and composition of the molten ferroalloy may be uniformized, and the efficiency of a denitrification refining process may also be improved.

Referring to FIG. 8B, a path 132 is formed along a bottom side of the accommodation unit 120, and the induction coil 131 is wound around the path 132. In the embodiment illustrated in FIG. 8B, a molten ferroalloy introduced into the path 132 is heated by the induction coil 131 wound around the path 132, and then the heated molten ferroalloy flows to the interior of the accommodation unit 120. In this manner, the molten ferroalloy may be maintained at a constant temperature.

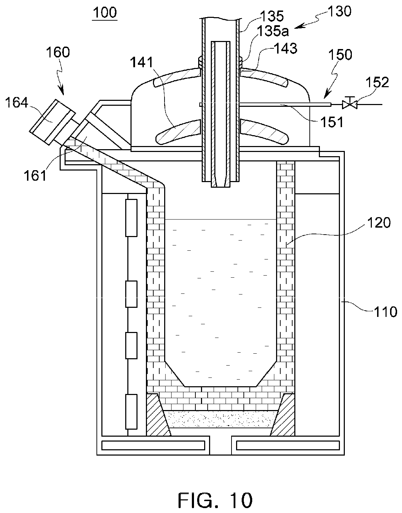

FIGS. 9 and 10 illustrate other examples of the heating unit 130 including electrode bars 133 or a plasma generator 135. Referring to FIGS. 9 and 10, the electrode bars 133 are inserted into the accommodation unit 120 through penetration holes 143 formed in the upper cover 140, or the plasma generator 135 is inserted into the accommodation unit 120 through a penetration hole 143 formed in the upper cover 140. Sealing members 133a, 135a are used to prevent leakage of an insert inert gas through the penetration holes 143.

FIGS. 11 and FIGS. 12A to 12C illustrate the driving units 190 and a guide frame 180 for tilting the holding furnace 100, according to an embodiment of the present disclosure. Referring to FIGS. 11 and FIGS. 12A to 12C, the driving units 190 are connected to a lower side of the case 110 of the holding furnace 100, and the guide frame 180 is disposed on a lateral side of the case 110.

The first guides 111 formed on the lateral side of the case 110 facing the guide frame 180. The first guides 111 (only one shown in FIGS. 12A to 12C) include: first members 111a extending on a horizontal plane forward in a tilting direction from connection points at which the case 110 and the driving units 190 are connected; second members 111b extending from the first members 111a and configured to receive guide rollers 181 for controlling tilting; and third members 111c extending from the second members 111b and sloped upwardly for guiding descending of the case 110.

The guide frame 180 is disposed on both sides of the case 110. The guide frame 180 includes the guide rollers 181 disposed at a predetermined height for coupling with the first members 111a.

In operation, if the case 110 is moved upwardly by the driving units 190, the first guides 111 are brought into contact with the guide rollers 181 of the guide frame 180. Then, the case 110 is no longer lifted but rotated by lifting force. That is, as the guide rollers 181 engage with the first guides 111, the case 110 starts to rotate, and the amount of rotation of the case 110 is determined by the amount of engagement between the guide rollers 181 and the first guides 111.

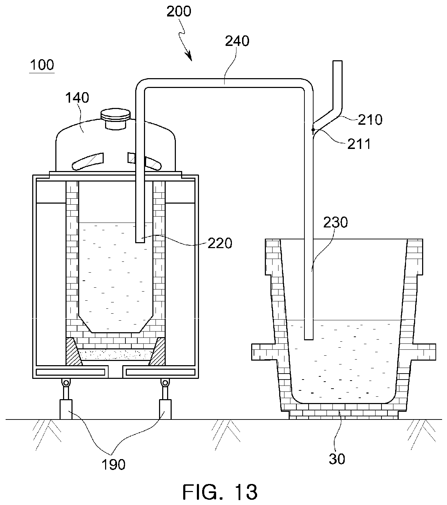

FIG. 13 illustrates another structure for tapping a molten metal according to another embodiment of the present disclosure. In the embodiment illustrated in FIG. 13, driving units 190 are connected to a lower side of a case 110 as in the embodiment shown in FIGS. 11 and FIGS. 12A to 12C. However, a siphon structure 200 is used instead of the molten steel outlet 160. The siphon structure 200 has a pipe shape including: a suction part 220 for suctioning a molten ferroalloy containing in a holding furnace 100; a discharge part 230 for discharging the molten ferroalloy to molten steel contained in a ladle 30; and a transfer part 240 through which the molten ferroalloy is transferred. An initial pressure port 210 is connected to the siphon structure 200 to generate an initial pressure difference.

The surface of the molten steel contained in the ladle 30 is lower than the surface of the molten ferroalloy contained in the holding furnace 100 so that a sufficient pressure differential may be generated to allow for siphonic free falling. At this time, if an initial pressure difference is created using a decompressing device (not shown) connected to an rear end of the initial pressure port 210, the molten ferroalloy contained in the holding furnace 100 is drawn into the transfer part 240 through the suction part 220, and thus if the molten ferroalloy drawn into the transfer part 240 starts to undergo free falling, the initial pressure port 210 is closed using a value 211. Then, the molten ferroalloy containing in the holding furnace 100 is forced to flow to the molten steel contained in the ladle 30 by a natural pressure difference.

As the molten ferroalloy is transferred from the holding furnace 100 to the ladle 30, the height difference between the surface of the molten steel contained in the holding furnace 100 and the molten steel contained in the ladle 30 is decreased, and thus negative pressure generated by free falling of the molten ferroalloy and acting on the suction part 220 is decreased. That is, the siphonic effect is lowered. In this case, the holding furnace 100 may be lifted using the driving units 190 to increase the height difference between the surface of the molten ferroalloy and the surface of the molten steel and maintain the siphonic effect.

If the siphon structure 200 is used, when a molten ferroalloy and molten steel are poured (mixed) together, it may not be necessary to tilt the holding furnace 100, and the molten ferroalloy may not absorb nitrogen from the air because the molten ferroalloy is not exposed to the air.

[Mode for Invention]

Hereinafter, the embodiments of the present disclosure will be explained more specifically through examples.

Table 1 illustrates results of Examples 1 to 4 and Comparative Examples 1 and 2.

[Table 1]

| | | Conditions | FeMn Composition | | | N variation |
|---|---|---|---|---|---|---|
| | | | C (wt%) | Mn (wt%) | Si (wt%) | |
| | Example 1 | Ar positive pressure | 1.5 | 71.2 | 0.6 | Maintain |
| | Example 2 | Ar lance injection | 1.5 | 70.7 | 0.5 | 0.002 wt% decrease for 370 min |

(continued)

| | Conditions | FeMn Composition | | | N variation |
|---|---|---|---|---|---|
| | | C (wt%) | Mn (wt%) | Si (wt%) | |
| Example 3 | Ar positive pressure + Si addition | 1.5 | 67.9 | 2.7 | 0.013 wt% decrease for 380 min |
| Example 4 | Ar lance injection + Si addition | 1.3 | 69.8 | 3.1 | 0.091 wt% decrease for 190 min |
| Comparative Example 1 | - | 1.48 | 70.9 | 0.6 | Increase |
| Comparative Example 2 | Si addition in small amounts | 0.2 | 70 | 1.5 | Slight decrease |

Example 1

1.5 tons of FeMn were melted in the holding furnace 100, and after closing the holding furnace 100 with the upper cover 140, the interior of the holding furnace 100 was controlled using an argon (Ar) atmosphere. While maintaining the interior of the holding furnace 100 at 1500°C, temperature measurement, sampling, and molten FeMn surface observation were performed at regular time intervals. At that time, the main components of the molten FeMn were 1.5 wt% carbon (C), 71.2 wt% manganese (Mn), and 0.6 wt% silicon (Si).

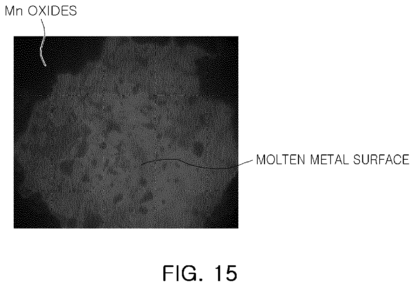

As shown in FIG. 15, since the interior of the holding furnace 100 was controlled using an argon (Ar) atmosphere, the nitrogen (N) content of the molten FeMn was maintained substantially at a constant level. That is, since the interior of the holding furnace 100 was filled with argon (Ar), the molten FeMn was not exposed to the air, and thus the absorption of nitrogen (N) was prevented.

FIG. 15 is an image of the surface of the molten FeMn. Referring to FIG. 15, the molten FeMn was maintained in an exposed state. Since the upper cover 140 was not closed and the interior of the holding furnace 100 was not maintained in an argon (Ar) atmosphere when the FeMn was initially melted and the surface of the molten FeMn was initially observed, Mn oxides were formed along a wall of the accommodation unit 120 around the center of the holding furnace 100. However, after the upper cover 140 is closed and the interior of the holding furnace 100 is filled with argon (Ar), Mn oxides were not formed any more. As shown in FIG. 15, the Mn oxides initially formed before the interior of the holding furnace 100 were maintained in an argon (Ar) atmosphere were moved toward the refractory material by agitation caused by an induced magnetic field, and the surface of the molten FeMn was exposed in a central region of the holding furnace 100 as described above.

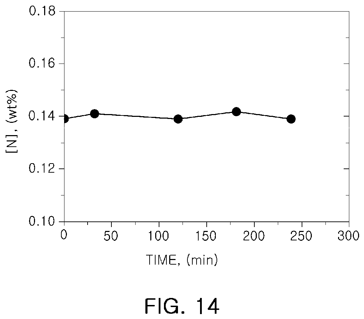

Since the interior of the holding furnace 100 was maintained in an argon (Ar) atmosphere, the permeation of air and nitrogen was blocked, and thus the formation of Mn oxides was prevented. However, as shown in FIG. 14, the high nitrogen (N) content of the molten FeMn was also not decreased. That is, the molten FeMn was not denitrified only by maintaining the interior of the holding furnace 100 in an argon (Ar) atmosphere.

Comparative Example 1

1.7 tons of FeMn was melted in the same holding furnace 100 as that used in Example 1, and the surface and nitrogen (N) content of the molten FeMn were observed or measured while maintaining the holding furnace 100 at 1500°C without filling the interior of the holding furnace 100 with argon (Ar) and closing the holding furnace 100 with the upper cover 140. The FeMn included 1.48 wt% carbon (C), 70.9 wt% manganese (Mn), and 0.6 wt% silicon (Si).

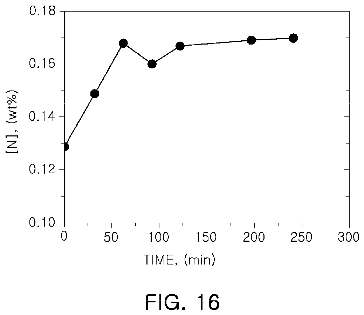

FIG. 16 illustrates the nitrogen (N) content of the molten FeMn of Comparative Example 1 over time when the molten FeMn was maintained at a temperature of 1500°C. Initially, the surface of the molten FeMn was maintained and exposed to the air, and thus nitrogen (N) was introduced into the molten FeMn. However, after the molten FeMn was maintained at 1500°C for 50 minutes, nitrogen (N) was not introduced into the molten FeMn. As shown in FIG.16, the reason for this was that Mn oxides were formed by a reaction between manganese (Mn) and oxygen at the surface of the molten FeMn exposed to the air, and thus air was blocked by the Mn oxides as if air was blocked by argon (Ar). Although the Mn oxides had the same effect of blocking air as the effect of blocking air by argon (Ar), manganese (Mn) was wasted by being oxidized, and if molten FeMn is additionally supplied, nitriding could occur again.

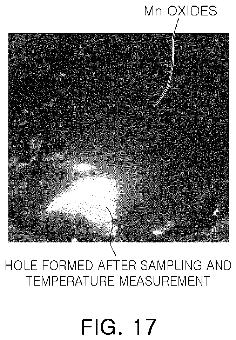

FIG. 17 illustrates slag formed on the molten FeMn. Since the interior of the holding furnace 100 was not filled with argon (Ar) and the upper cover 140 was opened, the molten FeMn was exposed to the air, and manganese (Mn) of the molten FeMn reacted with oxygen and formed Mn oxides.

When the surface of the molten FeMn started to make contact with nitrogen (N), the nitrogen (N) content of the molten FeMn increased. However, as the surface of the molten FeMn was covered with Mn oxides, the surface of the molten FeMn was restricted from making contact with the air, and thus the introduction of nitrogen (N) into the molten FeMn was blocked. However, after the introduction of nitrogen (N) was blocked, manganese (Mn) was continuously oxidized and wasted.

Example 2

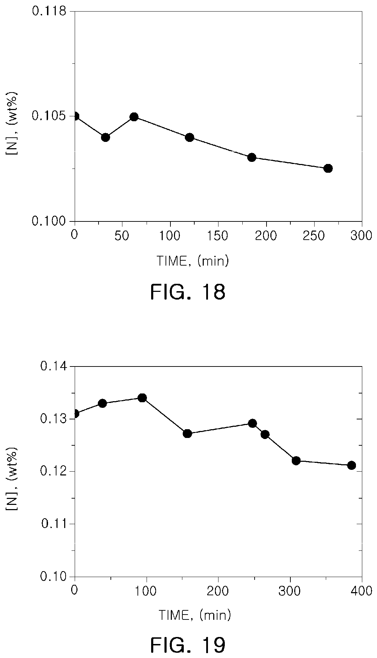

In Example 2, 1.4 tons of molten FeMn was stored at temperature of 1500°C in the same holding furnace 100 as that used in Comparative Example 1. The interior of the holding furnace 100 was filled with argon (Ar) as in Example 1. For filling the interior of the holding furnace 100 with argon (Ar) and obtaining an agitating effect by the argon (Ar), the lance 170 was inserted through an upper side of the holding furnace 100 into the molten FeMn to a depth of 200 mm from the surface of the molten FeMn, and argon (Ar) was blown into the molten FeMn through the lance 170 at a rate of 20 Nl/min. The FeMn included 1.5 wt% carbon (C), 70.7 wt% manganese (Mn), and 0.5 wt% silicon (Si). FIG. 18 illustrates the nitrogen (N) content of the molten FeMn over time. The nitrogen (N) content of the molten FeMn was decreased over time.

Example 3

In Example 3, 1.4 tons of molten FeMn was stored at 1500°C in the same holding furnace 100 as that used in Comparative Example 1. The holding furnace 100 was closed with the upper cover 140 and filled with argon (Ar) gas. The molten FeMn included 1.5 wt% carbon (C), 67.9 wt% manganese (Mn), and 2.7 wt% silicon (Si), and variations of the molten FeMn caused by the increased content of silicon (Si) were observed. As shown in FIG. 19, the nitrogen (N) content of the molten FeMn was gradually decreased over time.

Example 4

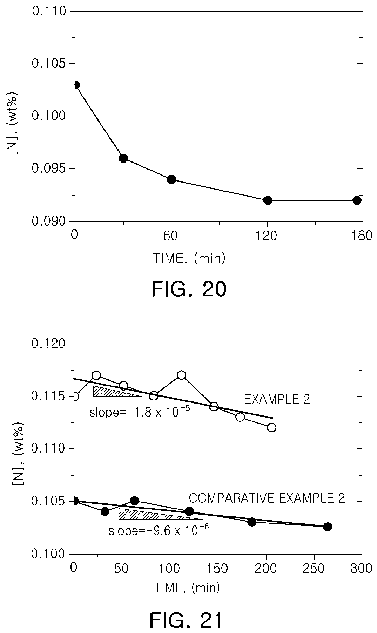

In Example 4, 1.4 tons of molten FeMn, as in Example 2, was stored at a temperature of 1500°C in the same holding furnace 100 as that used in Comparative Example 1. Argon (Ar) gas was blown into the molten FeMn as in Example 2, and the silicon (Si) content of the molten FeMn was increased as in Comparative Example 3. Effects of the argon (Ar) gas and the increased content of silicon (Si) were checked. The molten FeMn included 1.3 wt% carbon (C), 69.8 wt% manganese (Mn), and 3.1 wt% silicon (Si). As in Example 2, the lance 170 was inserted from the upper side of the holding furnace 100 into the molten FeMn to a depth of 200 mm from the surface of the molten FeMn, from argon (Ar) gas was blown through the lance 170. As shown in FIG. 20, the nitrogen (N) content of the molten FeMn was gradually decreased over time. The reduced amount of nitrogen was 0.091 wt% for 190 minutes. In Example 2, the reduced amount of nitrogen was 0.002 wt% for 370 minutes, and in Example 3, the reduced amount of nitrogen was 0.013 wt% for 380 minutes. That is, the rate of denitrification was not simply in linear proportion to the flow rate of argon (Ar) gas and the content of silicon (Si) but was in exponential proportion to the flow rate of argon (Ar) gas and the content of silicon (Si) owing to the synergy effect.

Comparative Example 2

In Comparative Example 2, the effects of argon (Ar) gas blown into molten FeMn and an increased content of silicon (Si) in the molten FeMn were checked as in Example 4. Unlike in Example 4, the molten FeMn included 1.5 wt% silicon (Si), 70 wt% manganese (Mn), and 0.2 wt% carbon (C). 1.4 tons of the molten FeMn was stored at 1500°C in the same holding furnace 100 as that used in Example 4, and the interior of the holding furnace 100 was filled with argon (Ar) gas. The lance 170 was inserted from the upper side of the holding furnace 100 into the molten FeMn to a depth of 200 mm from the surface of the molten FeMn, and argon (Ar) gas was blown through the lance 170 at a flow rate of 20 Nl/min. Results are shown in FIG. 21.

The nitrogen (N) content of the molten FeMn was decreased over time. As shown in FIG. 21, the rate of denitrification was slightly improved in Comparative Example 2 when compared to Example 2 in which the content of silicon (Si) was 0.8 wt%. However, this improvement was meaningless if factors such as an error range were considered. That is, it is preferable that the content of silicon (Si) is 1.5 wt% or greater, so as to obtain an meaningful improvement by only the addition of silicon (Si) or in combination with agitation by argon (Ar) gas.

Comparative Example 3

Molten FeMn was maintained at 1500°C in the holding furnace 100, and 0.35 tons of the molten FeMn was poured to 1.3 tons of molten steel contained in the ladle 30. For pouring (mixing) the molten FeMn and the molten steel together, the ladle 30 in which the molten steel was contained was moved to a position under the holding furnace 100, and the holding furnace 100 was tilted to pour the molten FeMn to the ladle 30. While mixing the molten FeMn and the molten steel, gas or mechanical agitation was not performed.

The molten FeMn included 70 wt% manganese (Mn), and the molten steel included 0.6 wt% manganese (Mn). A high Mn steel obtained by pouring (mixing) the molten FeMn and the molten steel together was expected to include 15.3 wt% manganese (Mn). However, the manganese (Mn) content of the high Mn steel was 46.7 wt% after 10 minutes from the pouring (mixing). That is, the molten FeMn was not uniformly mixed with the molten steel but stayed above the molten steel, and thus a sample taken at a position near the surface of the mixture had a high manganese (Mn) content.

Example 5

As in Comparative Example 3, high Mn steel was produced by mixing molten FeMn and molten steel. As in Comparative Example 3, 0.47 tons of molten FeMn contained at 1497°C in the holding furnace 100 was poured into 1.4 tons of molten steel contained in the ladle 30.

However, unlike in Comparative Example 3, when the molten FeMn and the molten steel was poured (mixed), argon (Ar) gas was blown at a flow rate of 10 Nl/min (10.9 Nl/min for each ton of high Mn steel) into the ladle 30 through a gas supply tube 31 located on a lower side of the ladle 30 to agitate the molten FeMn and the molten steel. The molten FeMn included 70.6 wt% manganese (Mn), and the molten steel included 0.6 wt% manganese (Mn). The manganese (Mn) content of high Mn steel produced by pouring (mixing) together the molten FeMn and the molten steel was expected to be 18.2 wt%. A sample of the high Mn steel taken immediately after the mixing was analyzed to have a manganese (Mn) content of 18.9 wt%, and a sample of the high Mn steel taken after 20 minutes from the start of pouring (mixing) was analyzed to have a manganese (Mn) content of 18.7 wt%. That is, agitation by the argon (Ar) gas blown from the lower side of the ladle 30 was effective in uniformizing the distribution of manganese (Mn) after the pouring (mixing).

Example 6

High Mn steel was produced under the same conditions as in Example 5 except for the use of an impeller instead of using gas agitation. The impeller was rotated at a speed of 30 rpm. In the same sequence as in Comparative Example 3 and Example 5, 0.52 tons of molten FeMn was poured into 1.1 tons of molten steel contained in the ladle 30, and the mixture of molten FeMn and molten steel was agitated using the impeller. The molten steel included 0.07 wt% manganese (Mn), and the molten FeMn included 67.9 wt% manganese (Mn). The high Mn steel produced by pouring (mixing) the molten FeMn and the molten steel together was expected to have a manganese (Mn) content of 21.8 wt%. A sample taken from the mixture (high Mn steel) after 2 minutes from the end of mechanical agitation by the impeller had a manganese (Mn) content of 21.6 wt%, and a sample taken from the mixture after 20 minutes from the end of mechanical agitation by the impeller had a manganese (Mn) content of 21.4 wt%. That is, the agitation by the impeller was effective in uniformizing the composition of the high Mn steel.

Example 7

0.34 tons of molten FeMn contained in a holding furnace was poured into 1.3 tons of molten FeMn contained in the ladle 30. If the temperature of the molten steel is required to be 1671°C when the molten steel is moved toward the holding furnace, and the temperature of molten high Mn steel is required to be 1590°C after the pouring (mixing), the temperature of the molten FeMn contained in the holding furnace may have to be adjusted to be 1483°C based on Formula 2 explained above. Therefore, after the holding furnace was maintained at 1450°C for 3 hours, the temperature of the holding furnace was increased 30 minutes before pouring (mixing), and the molten FeMn was drawn out of the holding furnace at a final temperature of 1477°C and poured into the molten steel contained in the ladle 30. The temperature of the mixture immediately after the pouring (mixing) was 1589°C. That is, high manganese molten steel having a temperature close to a desire temperature could be obtained.

**Claims**

1. A method of producing molten manganese-containing steel, the method comprising:

preparing a molten ferroalloy containing manganese or a molten nonferrous metal containing manganese;
maintaining the molten ferroalloy containing manganese or the molten nonferrous metal containing manganese at a temperature equal to or higher than a melting point thereof; and

pouring the molten ferroalloy containing manganese or the molten nonferrous metal containing manganese into prepared molten steel,

wherein in the maintaining of the molten ferroalloy or the molten nonferrous metal, the molten ferroalloy or the molten nonferrous metal is subjected to a nitrogen-absorption prevention process or a denitrification process.

2. The method of claim 1, wherein the maintaining of the molten ferroalloy or the molten nonferrous metal is carried out in a holding furnace together with the nitrogen-absorption prevention process or the denitrification process, and the nitrogen-absorption prevention process or the denitrification process comprises supplying argon (Ar) gas to the holding furnace as an atmospheric gas to maintain an interior of the holding furnace at a positive pressure.

3. The method of claim 1, wherein the maintaining of the molten ferroalloy or the molten nonferrous metal is carried out in a holding furnace together with the nitrogen-absorption prevention process or the denitrification process, and the nitrogen-absorption prevention process or the denitrification process comprises agitating the molten ferroalloy or the molten nonferrous metal in at least one of upper and lower regions of the holding furnace using argon (Ar) gas.

4. The method of any one of claims 1 to 3, wherein the nitrogen-absorption prevention process or the denitrification process comprises adding silicon (Si) to the molten ferroalloy such that the molten ferroalloy has a silicon (Si) content of 1.5 wt% or greater.

5. The method of claim 2, wherein the preparing of the molten ferroalloy or the molten nonferrous metal is performed in a holding furnace that comprises:

a case;
an accommodation unit disposed in the case and comprising an internal space to accommodate a molten or solid ferroalloy or nonferrous metal;
a heating unit configured to heat the ferroalloy or nonferrous metal contained in the accommodation unit; and
a cover disposed on an upper side of the accommodation unit to close the internal space of the accommodation unit,
wherein the cover comprises an atmospheric gas supply unit connected to an inert gas supply unit and supplying an atmospheric gas to the accommodation unit so that the ferroalloy or the nonferrous metal melted in the accommodation unit is denitrified or prevented from absorbing nitrogen.

6. The method of claim 1, wherein the molten ferroalloy or the molten nonferrous metal is prepared in an amount greater than a required amount in the pouring of the molten ferroalloy or the molten nonferrous metal, and after the required amount of the molten ferroalloy or the molten nonferrous metal is poured into the molten steel, a remaining amount of the molten ferroalloy or the molten nonferrous metal is continuously maintained at a temperature equal to or greater than the melting point.

7. The method of claim 2 or 3, wherein the preparing of the molten ferroalloy or the molten nonferrous metal comprises melting solid FeMN or a solid Mn metal having a manganese (Mn) content and a phosphorus (P) content according to the following formula:

$$P \text{ content (wt\%)} < -0.026 \times (\text{target Mn content (wt\%) of Mn-containing molten steel} + (4.72 \times 10^{-4}) \times (\text{target Mn content (wt\%) of Mn-containing molten steel})^2.$$

8. The method of claim 5, wherein the preparing of the molten ferroalloy or the molten nonferrous metal comprises induction heating using an induction coil that is provided in the heating unit of the holding furnace.

9. The method of claim 1, wherein the pouring of the molten ferroalloy or the molten nonferrous metal comprises:

pouring the molten ferroalloy or the molten nonferrous metal into a ladle in which the molten steel is contained; and
agitating the molten steel together with the molten ferroalloy or the molten nonferrous metal,
wherein the agitating is performed by supplying an inert gas through a lower side of the ladle.

10. The method of claim 1, wherein the pouring of the molten ferroalloy or the molten nonferrous metal comprises:

pouring the molten ferroalloy or the molten nonferrous metal into a ladle in which the molten steel is contained; and agitating the molten steel together with the molten ferroalloy or the molten nonferrous metal, wherein the agitating is performed using an agitator inserted through an upper side of the ladle into the molten steel and the molten ferroalloy or the molten nonferrous metal.

11. The method of claim 1, wherein in the maintaining of the molten ferroalloy or the molten nonferrous metal, the molten ferroalloy or the molten nonferrous metal is maintained at a temperature of 1300°C to 1500°C, and immediately prior to the pouring of the molten ferroalloy or the molten nonferrous metal, the method further comprises heating the molten ferroalloy or the molten nonferrous metal in consideration of states of the molten steel and target states of high manganese molten steel.

12. The method of claim 1, wherein after the pouring of the molten ferroalloy or the molten nonferrous metal, the method further comprises performing an RH vacuum refining process or a ladle furnace (LF) refining process in which at least one of Al, C, Cu, W, Ti, Nb, Sn, Sb, Cr, B, Ca, Si, and Ni is supplied to the molten steel and the molten ferroalloy or the molten nonferrous metal.

13. The method of claim 12, wherein the RH vacuum refining process is performed together with a dehydrogenation process.

**Patentansprüche**

1. Verfahren zum Herstellen schmelzflüssigen, manganhaltigen Stahls, wobei das Verfahren umfasst:

Vorbereiten einer schmelzflüssigen Eisenlegierung, die Mangan enthält, oder eines schmelzflüssigen Nichteisenmetalls, das Mangan enthält;
Warmhalten der schmelzflüssigen Eisenlegierung, die Mangan enthält, oder des schmelzflüssigen Nichteisenmetalls, das Mangan enthält, auf einer Temperatur, die gleich einem oder höher als ein Schmelzpunkt von dieser bzw. diesem ist; und
Eingießen der schmelzflüssigen Eisenlegierung, die Mangan enthält, oder des schmelzflüssigen Nichteisenmetalls, das Mangan enthält, in einen vorbereiteten schmelzflüssigen Stahl,
wobei beim Warmhalten der schmelzflüssigen Eisenlegierung oder des schmelzflüssigen Nichteisenmetalls die schmelzflüssige Eisenlegierung oder das schmelzflüssige Nichteisenmetall einem Stickstoffabsorptionsverhinderungsprozess oder einem Denitrifikationsprozess unterzogen wird.

2. Verfahren nach Anspruch 1, wobei das Warmhalten der schmelzflüssigen Eisenlegierung oder des schmelzflüssigen Nichteisenmetalls zusammen mit dem Stickstoffabsorptionsverhinderungsprozess oder dem Denitrifikationsprozess in einem Warmhalteofen erfolgt, und
der Stickstoffabsorptionsverhinderungsprozess oder der Denitrifikationsprozess umfasst, Argon-(Ar)-Gas dem Warmhalteofen als atmosphärisches Gas zuzuführen, um einen Innenraum des Warmhalteofens auf einem positiven Druck zu halten.

3. Verfahren nach Anspruch 1, wobei das Warmhalten der schmelzflüssigen Eisenlegierung oder des schmelzflüssigen Nichteisenmetalls zusammen mit dem Stickstoffabsorptionsverhinderungsprozess oder dem Denitrifikationsprozess in einem Warmhalteofen erfolgt, und
der Stickstoffabsorptionsverhinderungsprozess oder der Denitrifikationsprozess umfasst, die schmelzflüssige Eisenlegierung oder das schmelzflüssige Nichteisenmetall in mindestens einem von oberen und unteren Bereichen des Warmhalteofens unter Verwendung des Argon-(Ar)-Gases umzurühren.

4. Verfahren nach einem der Ansprüche 1 bis 3, wobei der Stickstoffabsorptionsverhinderungsprozess oder der Denitrifikationsprozess umfasst, Silicium (Si) der schmelzflüssigen Eisenlegierung so zuzusetzen, dass die schmelzflüssige Eisenlegierung einen Silicium-(Si)-Gehalt von 1,5 Gew.-% oder darüber aufweist.

5. Verfahren nach Anspruch 2, wobei das Vorbereiten der schmelzflüssigen Eisenlegierung oder des schmelzflüssigen Nichteisenmetalls in einem Warmhalteofen erfolgt, der aufweist:

ein Gehäuse;

eine Aufnahmeeinheit, die in dem Gehäuse angeordnet ist und einen Innenraum aufweist, um eine schmelzflüssige oder feste Eisenlegierung oder ein schmelzflüssiges oder festes Nichteisenmetall aufzunehmen;

eine Heizeinheit, die dazu ausgelegt ist, die Eisenlegierung oder das Nichteisenmetall zu erhitzen, die bzw. das in der Aufnahmeeinheit enthalten ist; und

eine Abdeckung, die auf einer Oberseite der Aufnahmeeinheit angeordnet ist, um den Innenraum der Aufnahmeeinheit zu schließen,

wobei die Abdeckung eine Zufuhreinheit für atmosphärisches Gas und eine Inertgaszufuhreinheit aufweist und der Aufnahmeeinheit ein atmosphärisches Gas zuführt, so dass die Eisenlegierung oder das Nichteisenmetall, die bzw. das in der Aufnahmeeinheit geschmolzen wird, denitrifiziert oder daran gehindert wird, Stickstoff zu absorbieren.

6.  Verfahren nach Anspruch 1, wobei die schmelzflüssige Eisenlegierung oder das schmelzflüssige Nichteisenmetall in einer Menge vorbereitet wird, die größer ist als eine beim Eingießen der schmelzflüssigen Eisenlegierung oder des schmelzflüssigen Nichteisenmetalls erforderlichen Menge, und

nachdem die erforderliche Menge der schmelzflüssigen Eisenlegierung oder des schmelzflüssigen Nichteisenmetalls in den schmelzflüssigen Stahl eingegossen wurde, eine restliche Menge der schmelzflüssigen Eisenlegierung oder des schmelzflüssigen Nichteisenmetalls fortwährend auf einer Temperatur gehalten wird, die gleich dem oder höher als der Schmelzpunkt ist.

7.  Verfahren nach Anspruch 2 oder 3, wobei das Vorbereiten der schmelzflüssigen Eisenlegierung oder des schmelzflüssigen Nichteisenmetalls umfasst, festes Eisenmangan (FeMn) oder ein festes Mangan-(Mn)-Metall zu schmelzen, das einen Mangan-(Mn)-Gehalt und einen Phosphor-(P)-Gehalt nach der folgenden Formel hat:

$$\text{P-Gehalt (Gew.-\%)} < 0{,}026 \times (\text{Ziel-Mn-Gehalt (Gew.-\%) des Mn-haltigen schmelzflüssigen Stahls}) + (4{,}72 \times 10^{-4}) \times (\text{Ziel-Mn-Gehalt Gew.-\%) des Mn-haltigen schmelzflüssigen Stahls})^2.$$

8.  Verfahren nach Anspruch 5, wobei das Vorbereiten der schmelzflüssigen Eisenlegierung oder des schmelzflüssigen Nichteisenmetalls eine Induktionserhitzung unter Verwendung einer Induktionsspule umfasst, die in der Heizeinheit des Warmhalteofens vorgesehen ist.

9.  Verfahren nach Anspruch 1, wobei das Eingießen der schmelzflüssigen Eisenlegierung oder des schmelzflüssigen Nichteisenmetalls umfasst:

Eingießen der schmelzflüssigen Eisenlegierung oder des schmelzflüssigen Nichteisenmetalls in eine Pfanne, in welcher der schmelzflüssige Stahl enthalten ist; und

Umrühren des schmelzflüssigen Stahls zusammen mit der schmelzflüssigen Eisenlegierung oder dem schmelzflüssigen Nichteisenmetall,

wobei das Umrühren durch Zuführen eines Inertgases durch die Unterseite der Pfanne hindurch erfolgt.

10. Verfahren nach Anspruch 1, wobei das Eingießen der schmelzflüssigen Eisenlegierung oder des schmelzflüssigen Nichteisenmetalls umfasst:

Eingießen der schmelzflüssigen Eisenlegierung oder des schmelzflüssigen Nichteisenmetalls in eine Pfanne, in welcher der schmelzflüssige Stahl enthalten ist; und

Umrühren des schmelzflüssigen Stahls zusammen mit der schmelzflüssigen Eisenlegierung oder dem schmelzflüssigen Nichteisenmetall,

wobei das Umrühren unter Verwendung eines Rührwerks erfolgt, das durch eine Oberseite der Pfanne hindurch in den schmelzflüssigen Stahl und die schmelzflüssige Eisenlegierung oder das schmelzflüssige Nichteisenmetall eingesetzt wird.

11. Verfahren nach Anspruch 1, wobei beim Warmhalten der schmelzflüssigen Eisenlegierung oder des schmelzflüssigen Nichteisenmetalls die schmelzflüssige Eisenlegierung oder das schmelzflüssige Nichteisenmetall auf einer Temperatur von 1300°C bis 1500°C gehalten wird, und

unmittelbar vor dem Eingießen der schmelzflüssigen Eisenlegierung oder des schmelzflüssigen Nichteisenmetalls das Verfahren darüber hinaus umfasst, die schmelzflüssige Eisenlegierung oder das schmelzflüssige Nichteisenmetall unter Berücksichtigung von Zuständen des schmelzflüssigen Stahls und Zielzuständen von manganreichem schmelzflüssigem Stahl zu erhitzen.

12. Verfahren nach Anspruch 1, wobei nach dem Eingießen der schmelzflüssigen Eisenlegierung oder des schmelzflüssigen Nichteisenmetalls das Verfahren darüber hinaus umfasst, einen RH-Vakuumfrischprozess oder einen Pfannenofen-(LF)-Frischprozess durchzuführen, bei dem AI, C, Cu, W, Ti, Nb, Sn, Sb, Cr, B, Ca, Si und/oder Ni dem schmelzflüssigen Stahl und der schmelzflüssigen Eisenlegierung oder dem schmelzflüssigen Nichteisenmetall zugeführt wird.

13. Verfahren nach Anspruch 12, wobei der RH-Vakuumfrischprozess zusammen mit einem Dehydrierungsprozess erfolgt.

**Revendications**

1. Procédé de production d'acier fondu contenant du manganèse, le procédé comprenant :

   la préparation d'un ferroalliage fondu contenant du manganèse ou d'un métal non ferreux fondu contenant du manganèse ;
   le maintien du ferroalliage fondu contenant du manganèse ou du métal non ferreux fondu contenant du manganèse à une température égale ou supérieure à un point de fusion de celui-ci ; et
   le versement du ferroalliage fondu contenant du manganèse ou du métal non ferreux fondu contenant du manganèse dans de l'acier fondu préparé,
   sachant que lors du maintien du ferroalliage fondu ou du métal non ferreux fondu, le ferroalliage fondu ou le métal non ferreux fondu est soumis à un processus de prévention d'absorption d'azote ou à un processus de dénitrification.

2. Le procédé de la revendication 1, sachant que le maintien du ferroalliage fondu ou du métal non ferreux fondu est effectué dans un four de retenue conjointement avec le processus de prévention d'absorption d'azote ou le processus de dénitrification, et
   le processus de prévention d'absorption d'azote ou le processus de dénitrification comprend la fourniture de gaz argon (Ar) au four de retenue en tant que gaz atmosphérique pour maintenir un intérieur du four de retenue à une pression positive.

3. Le procédé de la revendication 1, sachant que le maintien du ferroalliage fondu ou du métal non ferreux fondu est effectué dans un four de retenue conjointement au processus de prévention d'absorption d'azote ou au processus de dénitrification, et
   le processus de prévention d'absorption d'azote ou le processus de dénitrification comprend l'agitation du ferroalliage fondu ou du métal non ferreux fondu dans au moins l'une de régions supérieure et inférieure du four de retenue au moyen de gaz argon (Ar).

4. Le procédé de l'une quelconque des revendications 1 à 3, sachant que le processus de prévention d'absorption d'azote ou le processus de dénitrification comprend l'ajout de silicium (Si) au ferroalliage fondu de telle sorte que le ferroalliage fondu ait une teneur en silicium (Si) de 1,5% en poids ou plus.

5. Le procédé de la revendication 2, sachant que la préparation du ferroalliage fondu ou du métal non ferreux fondu est effectuée dans un four de retenue qui comprend :

   un carter ;
   une unité de logement disposée dans le carter et comprenant un espace interne pour loger un ferroalliage ou un métal non ferreux fondu ou solide ;
   une unité de chauffe configurée pour chauffer le ferroalliage ou le métal non ferreux contenu dans l'unité de logement ; et
   un couvercle disposé sur un côté supérieur de l'unité de logement pour fermer l'espace interne de l'unité de logement,
   sachant que le couvercle comprend une unité de fourniture de gaz atmosphérique connectée à une unité de fourniture de gaz inerte et fournissant un gaz atmosphérique à l'unité de logement de telle sorte que le ferroalliage ou le métal non ferreux mis en fusion dans l'unité de logement soit dénitrifié ou empêché d'absorber de l'azote.

6. Le procédé de la revendication 1, sachant que le ferroalliage fondu ou le métal non ferreux fondu est préparé dans une quantité supérieure à une quantité requise lors du versement du ferroalliage fondu ou du métal non ferreux fondu, et
après que la quantité requise du ferroalliage fondu ou du métal non ferreux fondu est versée dans l'acier fondu, une quantité restante du ferroalliage fondu ou du métal non ferreux fondu est maintenue continuellement à une température égale ou supérieure au point de fusion.

7. Le procédé de la revendication 2 ou 3, sachant que la préparation du ferroalliage fondu ou du métal non ferreux fondu comprend la fusion de FeMn solide ou d'un métal Mn solide ayant une teneur en manganèse (Mn) et une teneur en phosphore (P) conformes à la formule suivante :

teneur P (% poids) < -0,026 x (teneur Mn cible (% poids) d'acier fondu contenant du Mn + (4,72 x $10^{-4}$) x (teneur Mn cible (% poids) d'acier fondu contenant du Mn)².

8. Le procédé de la revendication 5, sachant que la préparation du ferroalliage fondu ou du métal non ferreux fondu comprend un chauffage par induction au moyen d'une bobine d'induction qui est prévue dans l'unité de chauffe du four de retenue.

9. Le procédé de la revendication 1, sachant que le versement du ferroalliage fondu ou du métal non ferreux fondu comprend :

le versement du ferroalliage fondu ou du métal non ferreux fondu dans une poche dans laquelle l'acier fondu est contenu ; et
l'agitation de l'acier fondu conjointement avec le ferroalliage fondu ou le métal non ferreux fondu, sachant que l'agitation est effectuée par fourniture d'un gaz inerte via un côté inférieur de la poche.

10. Le procédé de la revendication 1, sachant que le versement du ferroalliage fondu ou du métal non ferreux fondu comprend :

le versement du ferroalliage fondu ou du métal non ferreux fondu dans une poche dans laquelle l'acier fondu est contenu ; et
l'agitation de l'acier fondu conjointement avec le ferroalliage fondu ou le métal non ferreux fondu, sachant que l'agitation est effectuée au moyen d'un agitateur inséré via un côté supérieur de la poche dans l'acier fondu et le ferroalliage fondu ou le métal non ferreux fondu.

11. Le procédé de la revendication 1, sachant que lors du maintien du ferroalliage fondu ou du métal non ferreux fondu, le ferroalliage fondu ou le métal non ferreux fondu est maintenu à une température de 1300°C à 1500°C, et immédiatement avant le versement du ferroalliage fondu ou du métal non ferreux fondu, le procédé comprend en outre le chauffage du ferroalliage fondu ou du métal non ferreux fondu compte tenu d'états de l'acier fondu et d'états cibles d'un acier fondu à haut manganèse.

12. Le procédé de la revendication 1, sachant qu'après le versement du ferroalliage fondu ou du métal non ferreux fondu, le procédé comprend en outre l'exécution d'un processus d'affinage sous vide RH ou d'un processus d'affinage en four-poche (LF) dans lequel au moins l'un d'Al, C, Cu, W, Ti, Nb, Sn, Sb, Cr, B, Ca, Si, et Ni est fourni à l'acier fondu et au ferroalliage fondu ou au métal non ferreux fondu.

13. Le procédé de la revendication 12, sachant que le processus d'affinage sous vide RH est effectué conjointement avec un processus de déshydrogénation.

EP 2 985 359 B1

BOF BLOWING

RAW MATERIALS

(1,2,3,4,5,6)

MOLTEN STEEL TAPPING ← SUPPLY 1: HIGH C FeMn

MELTING

(5,6)        (1,2,3,4)

SUPPLY 2: LOW P HIGH C FeMn

DEPHOSPHORIZATION

(3,4)

SUPPLY 3: LOW P MEDIUM/LOW C FeMn
SUPPLY 5: MEDIUM/LOW C FeMn

REFINING

SUPPLY 4: ULTRA LOW P MEDIUM/LOW C FeMn
SUPPLY 6: LOW P MEDIUM/LOW C FeMn

(4,6)

DEPHOSPHORIZATION

FeMn PRODUCT

FIG. 1

S100

| BOF BLOWING | | SUPPLY OF FeMn, Mn METAL |─ S120 |

MELTING ─ S130

S140

SUPPLY TO STORAGE
(HOLDING FURNACE)

S150
─ 100

S110

MOLTEN STEEL TAPPING

(NITROGEN ABSORPTION
PREVENTION OR DENITRIFICATION)
& TEMPERATURE MAINTAINING

POURING (MIXING) ─ S160

RH ─ S170

CONTINUOUS CASTING ─ S180

FIG. 2

S200

| FeMn |
| :---: |

S210

| DEPHOSPHORIZATION |
| :---: |

S220

| PRODUCT |
| :---: |

S230

| P≤0.03 wt%, FeMn PRODUCT |
| :---: |

100

S240

| MELTING |
| :---: |

S250

| TEMPERATURE MAINTAINING & (NITROGEN ABSORPTION PREVENTION OR DENITRIFICATION) |
| :---: |

S260

| HEATING |
| :---: |

S270

| STEEL |
| :---: |

| POURING (MIXING) & AGITATING | S280 |
| :---: | :---: |

FIG. 3

FIG. 4A

FIG. 4B

FIG. 4C

FIG. 5

FIG. 6

FIG. 7

FIG. 8A

FIG. 8B

FIG. 9

FIG. 10

FIG. 11

FIG. 12A

FIG. 12B

FIG. 12C

FIG. 13

FIG. 14

Mn OXIDES

MOLTEN METAL SURFACE

FIG. 15

FIG. 16

Mn OXIDES

HOLE FORMED AFTER SAMPLING AND
TEMPERATURE MEASUREMENT

FIG. 17

FIG. 18

FIG. 19

FIG. 20

FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120180601 A
- KR 20080072786

- KR 1047912